# EUROPEAN PATENT APPLICATION

(11) **EP 4 818 511 A1**
(43) Date of publication of application: **07.10.2026**
(21) Application number: 26165181.4
(22) Date of filing: 16.03.2026
(51) Int. Cl.: F02M 37/00, F02M 37/08, F02M 37/14, F16L 3/12, F16L 3/22, F16L 3/237, H02G 3/32, B60R 16/02

(54) **FUEL SUPPLY DEVICE**

(30) Priority: 31.03.2025 JP 2025058898
(71) Applicant: Nikki Co., Ltd., Atsugi, Kanagawa 243-0801 (JP)
(72) Inventor: YASAKI, Masanori, Atsugi-shi, 243-0801 (JP); MURAKAMI, Tsutomu, Atsugi-shi, 243-0801 (JP)
(74) Representative: Boult Wade Tennant LLP

(57) **Abstract**

A fuel supply device (10) is disposed in a fuel supply path and includes a fuel storage tank (20a) that also functions as a reservoir tank. The fuel supply device (10) includes: a housing (20) including the fuel storage tank (20a) therein; a fuel pump (30); a vapor discharge portion (25); and a plurality of harnesses (70). The fuel supply device (10) further includes a harness binding member (80) attached to at least some of the plurality of harnesses (70) from an outer side and configured to bind the at least some harnesses (70) in the housing (20). This configuration allows the harness binding member (80) to collide with a peripheral portion, such as an inner wall of the housing (20), before the harnesses (70) swing and collide. Consequently, collision between the harnesses (70) and resultant damage are inhibited, and a connection state to the terminal is favorably maintained.

## Description

### Technical Field

The present invention relates to a fuel supply device disposed midway along a fuel supply path formed between a main fuel tank and an engine and including a fuel storage tank that also functions as a reservoir tank, and particularly relates to a fuel supply device for an outboard motor.

### Background Art

In the related art, as a fuel supply device (vapor separator tank (VST)) that is disposed midway along a fuel supply path formed between a main fuel tank and an engine and includes a fuel storage tank that also functions as a reservoir tank, there is known a fuel supply device including: a housing having a fuel storage tank therein; a fuel pump disposed in the housing and configured to pressure-feed fuel in the fuel storage tank; and a vapor discharge portion configured to discharge vapor in the fuel storage tank to outside of the housing (see, for example, JP 2022-18488 A).

### Citation List

### Patent Literature

Patent Literature 1: JP 2022-018488 A

### Summary of Invention

### Technical Problem

In such a fuel supply device described in JP 2022-018488 A, a plurality of harnesses extending from the fuel pump and connected to an external connection terminal installed on an inner surface side of the housing are provided for power supply and signal communication, but it has been found that there is room for improvement regarding damage to these harnesses.

Accordingly, the present invention solves these problems, and an object of the present invention is to provide a fuel supply device that inhibits damage to harnesses in a housing with a simple configuration.

### Solution to Problem

To solve the above problem, the present invention provides a fuel supply device that is disposed midway along a fuel supply path formed between a main fuel tank and an engine and includes a fuel storage tank that also functions as a reservoir tank. The fuel supply device includes: a housing having the fuel storage tank therein; a fuel pump disposed in the housing and configured to pressure-feed fuel in the fuel storage tank; a vapor discharge portion configured to discharge vapor inside the fuel storage tank to outside of the housing; and a plurality of harnesses extending from the fuel pump and connected to an external connection terminal installed on an inner surface side of the housing. The fuel supply device further includes a harness binding member attached to at least some of the plurality of harnesses from an outer side and configured to bind the at least some harnesses in the housing.

### Advantageous Effects of Invention

According to the present invention, it is possible to inhibit damage to harnesses in the housing with a simple configuration.

### Brief Description of Drawings

FIG. 1 is a perspective view illustrating a fuel supply device according to an embodiment of the present invention;
FIG. 2 is an explanatory view illustrating a configuration in a housing;

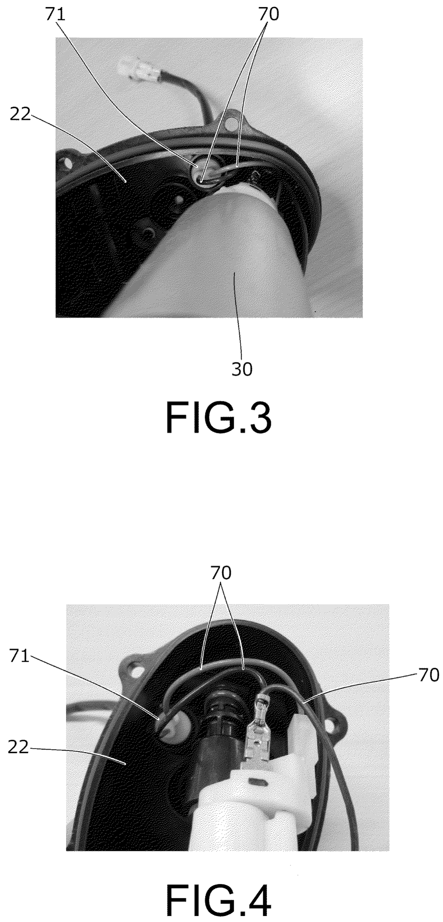

FIG. 3 is an explanatory view illustrating the vicinity of harnesses in a state where a harness binding member is not attached;
FIG. 4 is an explanatory view illustrating the vicinity of the harnesses in a state where a fuel pump is removed and the harness binding member is not attached;
FIG. 5 is an explanatory view illustrating the harnesses in a state where the harness binding member is attached; and
FIG. 6 is an explanatory view illustrating the harnesses in a state where the harness binding member is attached.

### Description of Embodiments

Hereinafter, a fuel supply device 10 according to an embodiment of the present invention will be described with reference to the drawings.

First, in the present embodiment, the fuel supply device 10 is configured as a fuel supply device (vapor separator tank (VST)) for an outboard motor. The fuel supply device 10 is disposed midway along a fuel supply path formed between a main fuel tank (not illustrated) installed on a hull of a ship such as a motor boat and an engine (not illustrated) of the outboard motor, and includes a fuel storage tank 20a that also functions as a reservoir tank for storing fuel from the main fuel tank and supplying the fuel to the engine.

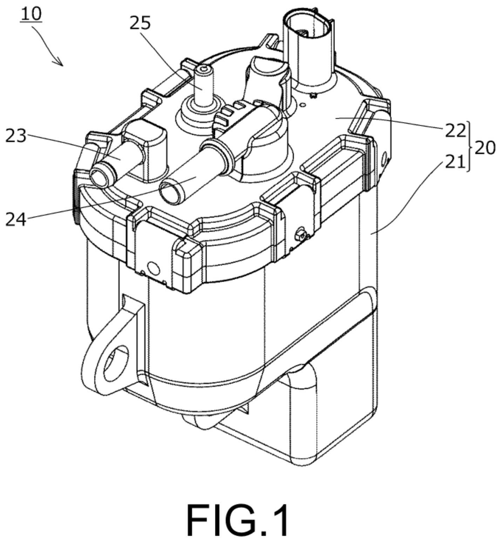

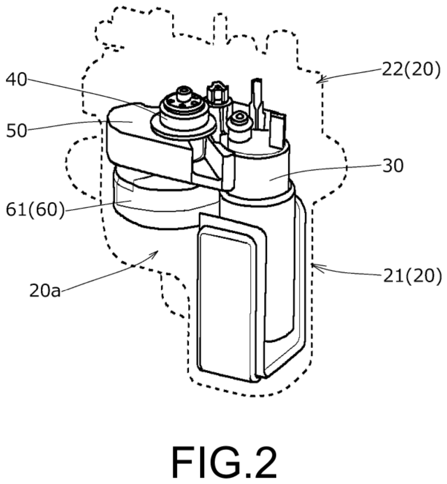

As illustrated in FIGS. 1 and 2, the fuel supply device 10 includes: a housing 20 having the fuel storage tank 20a therein; an electric fuel pump 30 disposed in the housing 20 and configured to pressure-feed the fuel in the fuel storage tank 20a; a vapor discharge portion 25 configured to discharge vapor in the fuel storage tank 20a to outside of the housing 20; a regulator 40 configured to return surplus fuel to the fuel storage tank 20a while adjusting the fuel pressure-fed by the fuel pump 30 to a predetermined pressure; a regulator holding member 50 configured to support the regulator 40 at an upper side of the fuel storage tank 20a; a fuel storage amount adjustment unit 60 configured to maintain a liquid level of the fuel stored in the fuel storage tank 20a at a constant level; a plurality of harnesses 70 extending from the fuel pump 30 and connected to an external connection terminal (not illustrated) installed on an inner surface side of the housing 20; and a harness binding member 80 configured to bind the harnesses 70.

Hereinafter, a specific configuration of each component of the fuel supply device 10 will be described with reference to the drawings.

First, the housing 20 is formed of synthetic resin or the like and includes a housing body 21 and a lid body 22 attached to the housing body 21 to airtightly close an opening of the housing body 21 as illustrated in FIG. 1.

As illustrated in FIG. 1, a fuel introduction pipe 23 introducing fuel into the fuel storage tank 20a, a fuel discharge pipe 24 discharging the fuel from the fuel storage tank 20a, and an atmosphere communication pipe 25 communicating between inside and outside of the housing 20 are provided on an upper surface of the lid body 22.

The atmosphere communication pipe 25 functions as a vapor discharge portion 25 discharging vapor (evaporated fuel) and air generated in the fuel storage tank 20a to the outside of the housing 20.

The fuel storage amount adjustment unit 60 is configured to maintain a liquid level of the fuel stored in the fuel storage tank 20a at a constant level while opening and closing a valve at a proximal end side of a valve lever (not illustrated) having a float 61 on a distal end side in a cantilever manner.

Each harness 70 is used to connect the fuel pump 30 to a connection target (specifically, an electronic apparatus such as a battery) outside of the housing 20 for power supply and signal communication. In the present embodiment, one end of each harness 70 is connected to the fuel pump 30, and the other end of each harness 70 has a harness terminal 71 connected to an external connection terminal (not illustrated) provided on the inner surface side of the housing 20 (lid body 22).

The harness 70 is connected to the connection target outside of the housing 20 by being connected to the external connection terminal.

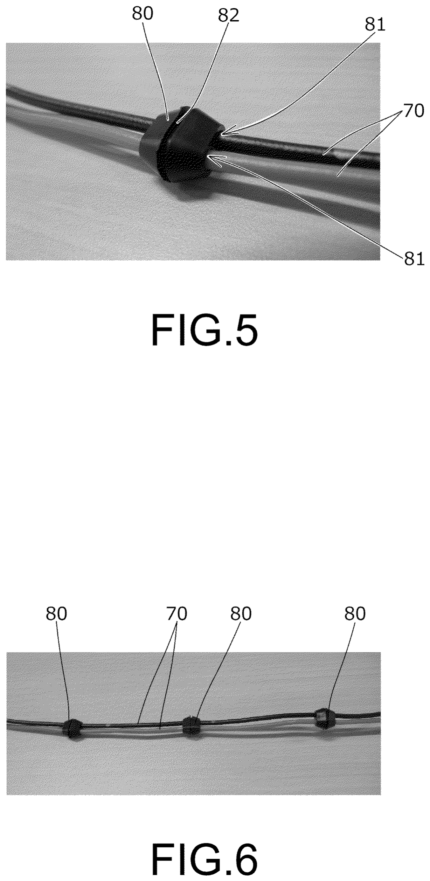

The harness binding member 80 is formed of an elastic material such as synthetic rubber, and as illustrated in FIGS. 5 and 6, is attached to at least some (two in the present embodiment) of the plurality of harnesses 70 in the housing 20 from the outer side of the harnesses 70 to bind these harnesses 70.

As illustrated in FIG. 5, the harness binding member 80 has a plurality of harness insertion holes 81 through which the harnesses 70 are independently inserted.

In the present embodiment, as illustrated in FIG. 6, the harness binding member 80 is attached to the harnesses 70 at a plurality of locations separated from each other in a longitudinal direction of the harnesses 70.

As illustrated in FIG. 5, each harness binding member 80 has a groove 82 recessed in an outer surface thereof.

The groove 82 is fitted to a part of the housing 20 (in the present embodiment, the lid body 22) in a state where the harnesses 70 are disposed in the housing 20, so that movement of the harnesses 70 is restricted.

In the fuel supply device 10 according to the present embodiment configured as described above, the harness binding member 80 is provided, which is attached from the outer side to at least some of the plurality of harnesses 70 in the housing 20 to bind the at least some harnesses 70. Therefore, even when the fuel supply device 10 is installed in an environment where the fuel supply device 10 shakes, when the harnesses 70 swing, it is possible to cause the harness binding member 80 to collide with a peripheral portion such as an inner wall of the housing 20 before the harnesses 70, and collision between the harnesses 70 can be inhibited. Thus, damage to the harnesses 70 can be inhibited.

Since the harness binding member 80 has the plurality of harness insertion holes 81 through which the harnesses 70 are independently inserted, it is possible to prevent the harnesses 70 from rubbing against each other at a bound portion. Therefore, it is possible to further inhibit the damage to the harnesses 70.

Since the harness binding member 80 is disposed in a state where the groove 82 recessed in the outer surface thereof is fitted to a part of the housing 20, movement of the harnesses 70 in the housing 20 can be restricted to inhibit damage to the harnesses 70, and a connection state of the harnesses 70 to the external connection terminal provided on the inner surface side of the lid body 22 can be favorably maintained. When the fuel supply device 10 is assembled, the harness binding member 80 attached to the harnesses 70 is attached to the housing 20 (in the present embodiment, the lid body 22), and thus it is easy to handle the housing 20 (in the present embodiment, the lid body 22) and the harnesses 70.

Further, since the harness binding members 80 are attached to the harnesses 70 at a plurality of locations separated from each other in the longitudinal direction of the harnesses 70, it is possible to inhibit damage to the harnesses 70 along the longitudinal direction of the harnesses 70.

Since the harness binding member 80 is formed of an elastic material, it is possible to inhibit damage to the harness binding member 80 itself, the harnesses 70, and the peripheral portion around the harnesses 70. Further, it is possible to stabilize the attachment state of the harness binding member 80 to the housing 20 (in the present embodiment, the lid body 22).

When the fuel supply device 10 is configured as a fuel supply device for an outboard motor, the fuel supply device 10 is installed in an environment where the fuel supply device 10 is greatly shaken during operation of a ship. Therefore, the effect of inhibiting damage to the harnesses 70 by the above-described harness binding member 80 becomes more pronounced.

Although the embodiment of the present invention has been described in detail above, the present invention is not limited to the above embodiment, and various design changes can be made without departing from the scope of the present invention defined in the claims. For example, the fuel supply device 10 may be configured by selectively combining the configurations of the embodiments and the modifications described above and below.

For example, in the above-described embodiment, it has been described that the plurality of harness insertion holes 81 are formed so that the harnesses 70 are independently inserted. However, the harness insertion hole 81 may be formed so that a plurality of harnesses 70 are collectively inserted, instead of receiving only a single harness 70.

### Reference Signs List

- 10: Fuel supply device
- 20: Housing
- 20a: Fuel storage tank
- 21: Housing body
- 22: Lid body
- 23: Fuel introduction pipe
- 24: Fuel discharge pipe
- 25: Atmosphere communication pipe (Vapor discharge portion)
- 30: Fuel pump
- 40: Regulator
- 50: Regulator holding member
- 60: Fuel storage amount adjustment unit
- 61: Float
- 70: Harness
- 71: Harness terminal
- 80: Harness binding member
- 81: Harness insertion hole
- 82: Groove

## Claims

1. A fuel supply device (10) configured to be disposed midway along a fuel supply path formed between a main fuel tank and an engine and including a fuel storage tank (20a) also functioning as a reservoir tank, the fuel supply device (10) comprising:
a housing (20) including the fuel storage tank (20a) therein;
a fuel pump (30) disposed in the housing (20) and configured to pressure-feed fuel in the fuel storage tank (20a) ;
a vapor discharge portion (25) configured to discharge vapor inside the fuel storage tank to outside of the housing (20); and
a plurality of harnesses (70) extending from the fuel pump (30) and connected to an external connection terminal installed on an inner surface side of the housing (20), wherein
the fuel supply device (10) further comprises a harness binding member (80) attached to at least some of the plurality of harnesses (70) from an outer side and configured to bind the at least some of the plurality of harnesses (70) in the housing (20).

2. The fuel supply device (10) according to claim 1, wherein the harness binding member (80) has a plurality of harness insertion holes (81) through which the harnesses (70) are independently inserted.

3. The fuel supply device (10) according to any one of claims 1 to 2, wherein the harness binding member (80) is disposed in a state where a groove (82) recessed in an outer surface of the harness binding member (80) is fitted to a part of the housing (20).

4. The fuel supply device (10) according to any one of claims 1 to 3, wherein the harness binding members (80) are attached to the harnesses (70) at a plurality of locations separated from each other in a longitudinal direction of the harnesses (70).

5. The fuel supply device (10) according to any one of claims 1 to 4, wherein the harness binding member (80) is formed of an elastic material.

6. The fuel supply device (10) according to any one of claims 1 to 5, wherein the fuel supply device (10) is configured as a fuel supply device for an outboard motor.
